# EUROPEAN PATENT APPLICATION

(11) **EP 1 520 997 A2**
(43) Date of publication of application: **06.04.2005**
(21) Application number: 04023151.6
(22) Date of filing: 29.09.2004
(51) Int. Cl.: F16B 21/07, F16B 37/04

(54) **Releasable pressure pin**

(30) Priority: 30.09.2003 IT TO20030757
(71) Applicant: Aktiebolaget SKF, S 415 50 Göteborg (SE)
(72) Inventor: Martini, Davide, 78450 Chavenay (FR); Gallucci, Francesco, 10042 Nichelino (TO) (IT)
(74) Representative: Lotti, Giorgio

(57) **Abstract**

Reversible pressure pin (1) which is provided with a stem (2) presenting a longitudinal axis (A), and being also provided with an end head (3) which is integral with the stem (2); a spiral thread (4) which extends along the stem (2), and presenting an outer placement surface (5)which is inclined at an angle which is substantially equal to 24° in relation to the axis (A) and in a placement direction (G) of the pin (1) itself.

## Description

The present invention refers to a reversible pressure pin.

In general, pressure pins are well known, which are suitable for being pressure inserted inside a cylindrical housing, and they comprise a stem which presents a longitudinal axis, an end head which is integral with the stem, and a number of conical projections which are arranged one after the other along the stem and transverse to the axis.

Pins of the type which have just been described above present a disadvantage, in that it is impossible to remove the pins themselves easily once they have been placed.

The aim of the present invention is to produce a reversible pressure pin, which will be free of the above-described disadvantage.

According to the present invention, a reversible pressure pin will be produced comprising a stem presenting a longitudinal axis, and an end head which is integral with the stem; the pin being characterised by the fact that it comprises a spiral thread which extends along the stem, and presents an outer placement surface which is inclined at an angle which is substantially equal to 24° in relation to the axis and in a placement direction of the pin itself.

The present invention will now be described with reference to the attached drawings, which illustrate a non-limiting form of embodiment of the present invention, and in which:
- FIGURE 1 is a lateral elevation view of a preferred form of embodiment of the pin according to the present invention; and
- FIGURE 2 is a view from above of the pin which is illustrated in FIGURE 1.

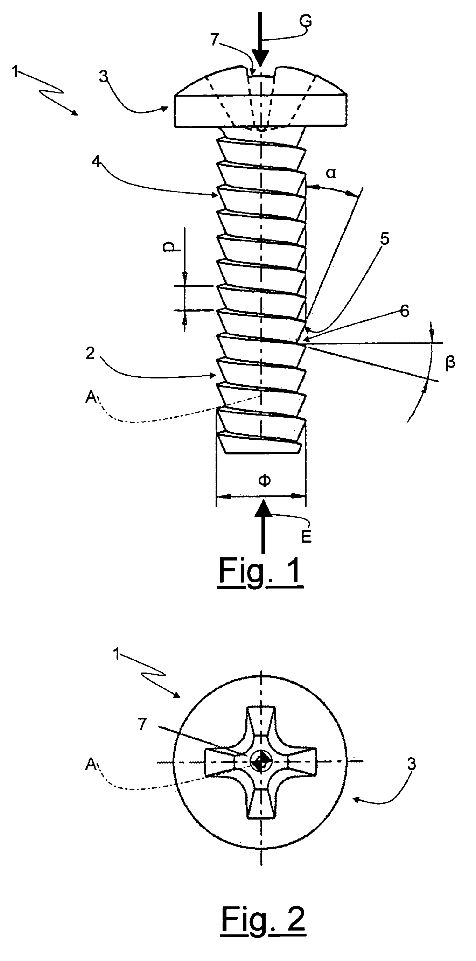

With reference to FIGURES 1 and 2, the number 1 refers to a reversible pressure pin in its entirety.

The pin 1 is made of plastic material, and comprises a stem 2 which presents a longitudinal axis A, an end head 3 which is integral with the stem 2, and a spiral thread 4, which extends along the stem 2 itself, and which comprises, in turn, an outer placement surface 5 which is inclined at an angle α which is substantially equal to 24° in relation to the axis A and in a placement direction G of the pin 1 itself.

The thread 4 comprises an outer extraction surface 6 which is inclined at an angle β which is substantially equal to 85° in relation to the axis A and in an extraction direction E of the pin 1 itself opposite and parallel to the placement direction G.

The thread 4 presents:
- an outer nominal diameter Φ which is of determined dimensions, and a lead angle P which is of dimensions which are substantially equal to 1/3.6 of the dimensions of the outer nominal diameter Φ itself; and
- an internal diameter N which is inside the outer nominal diameter Φ, and which is of dimensions such that the difference between the diameter Φ and a dimension of the diameter N is equal to 1/2.5 of the dimensions of the lead angle P.

The end head 3 is provided with an upper indentation (impronta) 7, and presents an outer diameter of dimensions which are less than the double of the dimensions of the outer nominal diameter Φ, while the stem 2 presents a minimal length which is equal to 1.8 of the dimensions of the diameter Φ.

The use of the pin 1 which has been described above is particularly advantageous in all those applications in which, once the pin 1 has been placed inside a respective cylindrical housing, which is preferably made of material of a yielding kind, it is necessary to provide for the rapid removal of the pin 1 itself so that it is possible to permit maintenance operations or the replacement of assembled components by means of the pin 1.

It is intended that the present invention should not be limited to the form of embodiment which is herein described and illustrated, which is to be considered as an example of a form of embodiment of the reversible pressure pin, and which may instead be subject to further modifications relating to the shape and disposition of the parts, as well as to details pertaining to construction and assembly.

## Claims

1. Reversible pressure pin (1) comprising a stem (2) presenting a longitudinal axis (A), and an end head (3) which is integral with the stem (2); the pin (1) being **characterised by** the fact that it comprises a spiral thread (4) which extends along the stem (2), and presents an outer placement surface (5) which is inclined at an angle which is substantially equal to 24° in relation to the axis (A) and in a placement direction (G) of the pin (1) itself.

2. Pressure pin according to Claim 1, **characterised by** the fact that the spiral thread (4) comprises an outer extraction surface (6) which is inclined at an angle which is substantially equal to 85° in relation to the axis (A) and in an extraction direction (E) of the pin (1) itself opposite and parallel to the placement direction (G).

3. Pressure pin according to Claim 2, **characterised by** the fact that the said thread (4) presents an outer nominal diameter (Φ) which is of determined dimensions, and a lead angle (P) which is of dimensions which are substantially equal to 1/3.6 of the dimensions of the outer nominal diameter (Φ) itself.

4. Pressure pin according to Claims 2 or 3, **characterised by** the fact that the said thread (4) presents an internal diameter (N) inside the said outer nominal diameter (Φ); the difference between the dimension of the said outer nominal diameter (Φ) and a dimension of the internal diameter (N) being substantially equal to 1/2.5 of the dimensions of the lead angle (P).

5. Pressure pin according to Claim 3, **characterised by** the fact that the said end head (3) presents an outer diameter which is of dimensions which are less than the double of the dimensions of the said outer nominal diameter (Φ).

6. Pressure pin according to Claim 3, **characterised by** the fact that the said stem (2) presents a minimal length which is equal to 1.8 of the dimensions of the outer nominal diameter (Φ).

7. Pressure pin according to any of the preceding Claims whatsoever, **characterised by** the fact that it is made of plastic material.
